# EUROPÄISCHE PATENTSCHRIFT

(11) **EP 2 475 497 B1**
(45) Veröffentlichungstag und Bekanntmachung des Hinweises auf die Patenterteilung: **11.12.2013**
(21) Anmeldenummer: 10768876.4
(22) Anmeldetag: 15.10.2010
(51) Int. Cl.: B23Q 1/52, B23Q 16/02

(54) **RUNDSCHALTTISCH**
ROTARY INDEXING TABLE
TABLE DE TRANSFERT CIRCULAIRE

(30) Priorität: 16.10.2009 DE 102009049618; 16.10.2009 DE 202009014041 U
(43) Veröffentlichungstag der Anmeldung: 18.07.2012
(73) Patentinhaber: Weiss GmbH, 74722 Buchen (DE)
(72) Erfinder: WEISS, Uwe, 74722 Buchen-Boedigheim (DE)
(74) Vertreter: Manitz, Finsterwald & Partner GbR
(86) Internationale Anmeldenummer: PCT/EP2010/006321
(87) Internationale Veröffentlichungsnummer: WO 2011/045078

(56) Entgegenhaltungen:
- EP-A1- 1 754 566
- DE-A1-102006 061 310
- DE-B3-102007 021 681
- GB-A- 890 116

## Beschreibung

Die vorliegende Erfindung betrifft einen Rundschalttisch mit einem Teller und zumindest zwei Motoren zum Antrieb des Tellers zu einer Drehbewegung.

Rundschalttische finden eine breite Anwendung unter anderem in der Montage- und Automatisierungstechnik. Sie weisen zumeist einen senkrecht oder auch waagrecht angeordneten Drehteller auf, auf dem ein Werkstück aufgespannt werden kann, um Bearbeitungen/ Montageschritte an dem Werkstück in verschiedenen Positionen oder am drehenden Werkstück vorzunehmen. Da inzwischen immer größere Werkstücke automatisiert bearbeitet werden, besteht ein Bedarf nach zuverlässigen Rundschalttischen, die den dabei auftretenden Belastungen gewachsen sind.

Die DE 102007 021681 B3 offenbart einen Rundschalttisch mit den Merkmalen des Oberbegriffs des Anspruchs 1. Die GB 890, 116 A offenbart einen durch zwei Schneckengetriebe angetriebenen Rundschalttisch.

Es ist eine Aufgabe der vorliegenden Erfindung, einen Rundschalttisch zu schaffen, der auch große Lasten zuverlässig bewältigen und präzise positionieren kann. Außerdem soll der Rundschalttisch flexibel einsetzbar sein.

Diese Aufgabe wird durch einen Rundschalttisch mit den Merkmalen des Anspruchs 1 gelöst.

Wie bereits eingangs erwähnt, weist der erfindungsgemäße Rundschalttisch einen Teller und zumindest zwei Motoren zum Antrieb des Tellers zu einer Drehbewegung auf. Die Motoren stehen über zumindest eine Kurventrommel antriebswirksam mit dem Teller in Verbindung. Die Kurventrommel weist eine Antriebsnut auf, in die Mitnehmer eingreifen, die dem Teller zugeordnet sind. Die Antriebsnut besitzt eine konstante Steigung.

Mit anderen Worten nutzt der erfindungsgemäße Rundschalttisch zumindest zwei Motoren, um auch bei großen Belastungen eine zuverlässige Drehbewegung des Drehtellers sicherzustellen. Grundsätzlich kann eine beliebige Anzahl von Motoren vorgesehen sein, um dem jeweils vorliegenden Anwendungsprofil Rechnung zu tragen. Der Antrieb kann direkt oder indirekt erfolgen. Unter einem indirekten Antrieb ist die Zwischenschaltung eines Getriebes zwischen dem jeweiligen Motor und der Kurventrommel zu verstehen.

Die Übertragung des Antriebsmoments der zumindest zwei Motoren auf den Teller erfolgt in grundsätzlich bekannter Weise über zumindest eine Kurventrommel, d.h. der Teller weist Mitnehmer auf, die in die Antriebsnut der Kurventrommel eingreifen, sodass bei einer Rotation der Kurventrommel eine Drehbewegung des Tellers erzeugt wird (Antriebsnut-Mitnehmer-Kopplung). Wie vorstehend bereits in Bezug auf die Motoren ausgeführt, kann die Anzahl der Kurventrommeln ebenfalls entsprechend der jeweils vorliegenden Bedingungen gewählt werden.

Um den Rundschalttisch möglichst flexibel einsetzen zu können, d.h. die Drehbewegung des Drehtellers den jeweiligen Anforderungen anpassen zu können, weist die Antriebsnut eine konstante Steigung auf. Ein Schrittbetrieb des Tellers wird somit nicht durch einen Rastgang - einen Abschnitt der Antriebsnut ohne Steigung - erzeugt, sondern durch eine entsprechende Steuerung der Antriebsleistung der Motoren. Eine Kurventrommel mit einer Antriebsnut mit einer konstanten Steigung ist in der Regel kostengünstiger herzustellen als Kurventrommeln mit einer Antriebsnut mit variierender Steigung, bei denen die Bewegung des Drehtellers durch die Formgebung der Antriebsnut "kodiert" ist und das der Kurventrommel zur Verfügung gestellte Antriebsmoment im Wesentlichen zeitlich konstant ist.

Der erfindungsgemäße Rundschalttisch mit einer beliebigen Anzahl von Motoren (mindestens zwei) und einer beliebigen Anzahl von Kurventrommeln (mindestens eine) ist leistungsfähig und flexibel einsetzbar. Insbesondere können die Motoren und/oder Kurventrommeln als modulare Bestandteile ausgeführt sein, um die Kosten zu senken. Durch das Vorsehen einer Antriebsnut mit konstanter Steigung ist bei einer Änderung des Anforderungsprofils an die Bewegung des Drehtellers kein Austausch mechanischer Teile (Kurventrommel) notwendig. Lediglich die Ansteuerung der Motoren muss angepasst werden.

Weitere vorteilhafte Ausführungsformen der Erfindung sind in der Beschreibung, den Zeichnungen und den Unteransprüchen beschrieben.

Gemäß einer vorteilhaften Ausführungsform des erfindungsgemäßen Rundschalttisches weist dieser zumindest eine weitere Kurventrommel mit einer Antriebsnut auf, in die die Mitnehmer des Tellers eingreifen, wobei der Kurventrommel und der weiteren Kurventrommel jeweils ein Motor antriebswirksam zugeordnet ist. Mit anderen Worten sind bei dieser Ausführungsform zumindest zwei Kurventrommeln vorgesehen, die jeweils von zumindest einem Motor angetrieben werden.

Die beschriebene Ausführungsform reduziert - verglichen mit Ausführungsformen mit lediglich einer Kurventrommel - die auf die jeweilige Antriebsnut bzw. Mitnehmer wirkenden Kräfte und ermöglicht somit einen effizienteren Drehmomentübertrag. Zudem wird der Verschleiß der genannten Komponenten des Antriebs des Tellers reduziert.

Grundsätzlich lassen sich die unterschiedlichsten Kombinationen von Motoren und Kurventrommeln realisieren. Zum Beispiel kann auch vorgesehen sein, zumindest einer der Kurventrommeln, insbesondere aber jeder Kurventrommel zwei Motoren zuzuordnen.

Eine konstruktiv besonders einfache Variante des erfindungsgemäßen Rundschalttischs sieht vor, dass die Kurventrommel und der ihr jeweils zugeordnete Motor koaxial angeordnet sind. Sind einer Kurventrommel zwei Motoren zugeordnet, so können auch beide Motoren koaxial zu der Kurventrommel angeordnet sein.

Die Motoren sind Asynchronmotoren, die derart miteinander verschaltet sind, dass Leistungsunterschiede oder Leistungsschwankungen der Asynchronmotoren automatisch ausgeglichen werden. Ein derartiges automatisches Ausgleichen wird auf einfache Weise dadurch realisiert, dass die Asynchronmotoren parallel geschaltet und von einer gemeinsamen Steuerungseinrichtung ansteuerbar sind. Die Steuerungseinrichtung ist ein einziger Verstärker, der die Motoren mit elektrischer Energie versorgt.

Die vorstehend beschriebenen Ausführungsformen ermöglichen eine einfachere Synchronisierung der Motoren, um ein unerwünschtes Verspannen der Antriebskomponenten des Rundschalttischs zu vermeiden.

Für bestimmte Anwendungen des erfindungsgemäßen Rundschalttischs ist es von Vorteil, wenn zumindest einer der Motoren ein Torque-Motor ist, der die Kurventrommel direkt antreibt. Bei einem Torque-Motor handelt es sich - vereinfacht gesagt - um einen getriebelosen Direktantrieb mit einem relativ hohen Antriebsdrehmoment und einer relativ geringen Antriebsdrehzahl verglichen mit üblichen Elektromotoren. Da Getriebe, die nur mit hohem Aufwand spielarm gebaut werden können, entfallen, sinken die Herstellungskosten für einen derartigen Rundschalttisch. Außerdem wird u.a. eine höhere Dynamik des Rundschalttischs und eine höhere Präzision der Drehtellerpositionierung erreicht.

Bevorzugt ist die Kurventrommel von zwei Torque-Motoren antreibbar, die an jeweils einer der Stirnseiten der Kurventrommel koaxial zu der Kurventrommel angeordnet sind.

Gemäß einer Weiterbildung der Ausführungsformen des Rundschalttischs mit Torque-Motoren weist die Kurventrommel einen Fortsatz auf, der im Wesentlichen den Durchmesser der Kurventrommel besitzt und der Funktionsbestandteile des Torque-Motors aufweist. Der Antrieb der Kurventrommel erfolgt somit nicht über eine Antriebswelle der Kurventrommel, sondern die Kurventrommel selbst wird angetrieben. Funktionsbestandteile des Torque-Motors sind solche Elemente, die für einen Betrieb des Motors erforderlich sind, wie beispielsweise Spulen und Magnete. Mit anderen Worten sieht diese Ausführungsform vor, dass die Kurventrommel mit einem Abschnitt - der bevorzugt ohne Antriebsnut ausgeführt ist - selbst ein Element des Motors bildet, wodurch der Motor besonders effizient ist und ein hohes Drehmoment erzeugt. Der genannte Kurventrommelabschnitt ist somit der Rotor des Torque-Motors, der integral mit dem mit der Antriebsnut versehenen Abschnitt der Kurventrommel verbunden ist.

Die vorstehend beschriebenen Ausführungsformen schließen nicht aus, dass unterschiedliche Typen von Motoren (Synchron-, Asynchron-, Torque-Motoren) miteinander kombiniert werden, um einen der jeweiligen Situation angepassten Antrieb des Rundschalttisches zu ermöglichen. Die Anzahl der Motoren und der Kurventrommeln ist grundsätzlich beliebig, soweit zumindest zwei Motoren und eine Kurventrommel vorgesehen sind.

Der Kurventrommel bzw. den Kurventrommeln kann jeweils eine beliebige Anzahl von Motoren zugeordnet sein.

Die Erfindung betrifft weiterhin ein Verfahren zum Betrieb eines Rundschalttischs mit zumindest zwei Motoren.

Bei derartigen Rundschalttischen tritt das Problem auf, dass die Motoren miteinander synchronisiert werden müssen, um Verspannungen der Komponenten des Antriebs des Rundschalttischs zu vermeiden.

Es ist somit eine weitere Aufgabe der Erfindung, ein Verfahren zu schaffen, das einen zuverlässigen Betrieb eines Rundschalttischs der vorstehend genannten Art ermöglicht.

Die Lösung dieser Aufgabe erfolgt durch ein Verfahren mit den Merkmalen des Anspruchs 8.

Die erste Lösungsvariante bezieht sich auf Rundschalttische, die zwei oder mehr Asynchronmotoren aufweisen. Erfindungsgemäß werden die Asynchronmotoren von einer gemeinsamen Steuerungseinrichtung, insbesondere einem Verstärker, mit einer gemeinsamen Arbeitsbestromung beaufschlagt, sodass sich automatisch eine gleiche Leistungsabgabe der Asynchronmotoren einstellt.

Dabei macht man sich zunutze, dass bei parallel geschalteten Asynchronmotoren, die einem einzigen Verstärker zugeordnet sind, ein automatischer Ausgleich der Leistungsabgabe zwischen den beiden Motoren erfolgt. Ein aufwändiger Regelkreis ist daher nicht erforderlich.

Grundsätzlich kann nicht erfindungsgemäß den Motoren jeweils eine eigene Steuereinrichtung zugeordnet sein, wobei Daten von einer der Steuereinrichtungen zu der anderen Steuereinrichtung übertragen werden, um anhand der Daten eine Steuerung des der anderen Steuereinrichtung zugeordneten Motors anzupassen. Diese Variante sieht somit eine Master-Slave-Konfiguration vor, bei der eine Steuerungseinrichtung eine Führungsfunktion übernimmt. Sie steuert einen primären Motor, der für die Positionierung des Drehtellers zuständig ist. Die primäre Steuereinrichtung übermittelt Daten an eine sekundäre Steuerungseinheit, die einem sekundären Motor zugeordnet ist. Anhand dieser Daten reagiert die sekundäre Steuerungseinheit und steuert den sekundären Motor derart an, dass dieser unterstützendes Antriebsmoment aufbringt. Bildlich gesprochen "zieht" der primäre Motor, während der sekundäre Motor zusätzlich "anschiebt". Es versteht sich, dass mehrere sekundäre Steuerungseinheiten/sekundäre Motoren vorgesehen sein können. Mehrere sekundäre Motoren können auch von einer gemeinsamen sekundären Steuerungseinheit gesteuert werden.

Nachfolgend wird die Erfindung rein beispielhaft anhand vorteilhafter Ausführungsformen unter Bezugnahme auf die Zeichnungen erläutert. Es zeigen:
- Fig. 1a bis 1c: eine Ausführungsform des erfindungsgemäßen Rundschalttischs,
- Fig.2a und 2b: eine weitere Ausführungsform des erfindungsgemäßen Rundschalttischs,
- Fig. 3: eine weitere Ausführungsform des erfindungsgemäßen Rundschalttischs,
- Fig. 4: eine schematische Darstellung einer weiteren Ausführungsform des erfindungsgemäßen Rundschalttischs,
- Fig. 5: einen Schnitt durch eine Kurventrommel und ihren direkten Antrieb durch zwei Torque-Motoren, und
- Fig. 6: einen Schaltplan für einen erfindungsgemäßen Rundschalttisch, der von zwei Asynchronmotoren angetrieben wird.

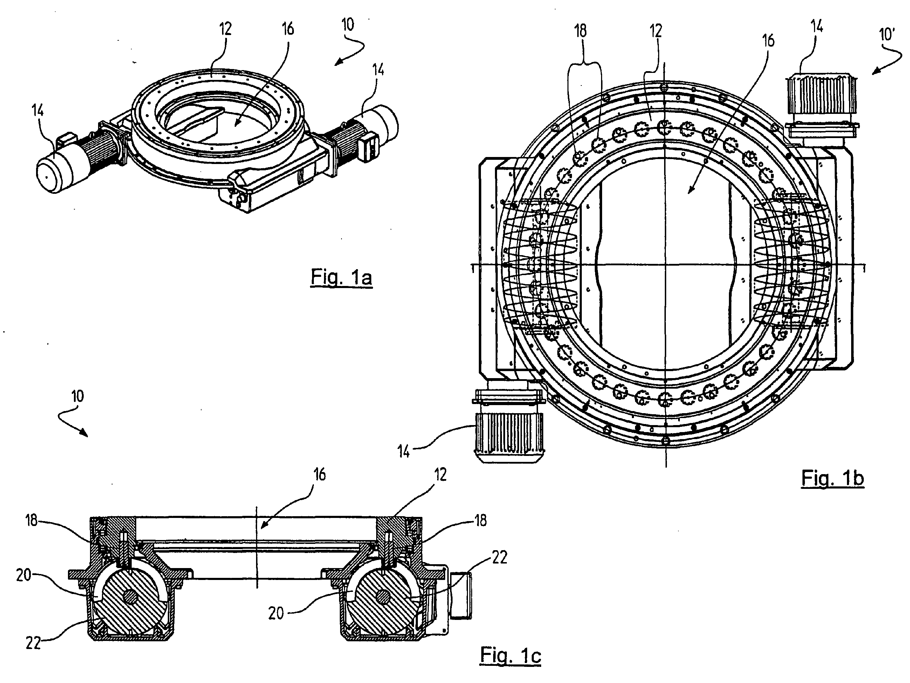

Fig. 1a zeigt perspektivisch einen Rundschalttisch 10, der einen ringförmigen Drehteller 12 aufweist, der von zwei Motoren 14 zu einer Drehbewegung angetrieben wird. Der Drehteller 12 umschließt eine zentrale Öffnung 16, in der beispielsweise ein oder mehrere Bearbeitungsmaschinen zur Bearbeitung von auf dem Drehteller 12 befestigten Werkstücken angeordnet sein können.

Fig. 1b zeigt im Wesentlichen die Ausführungsform der Fig. 1a in einer Draufsicht, wobei gestrichelt eingezeichnete Mitnehmer 18 zu erkennen sind, die an der - in Gebrauchslage - unteren Seite des Drehtellers 12 angeordnet sind. Lediglich die Motoren 14 sind anders dimensioniert als die in Fig. 1a gezeigten.

Wie in Fig. 1c ersichtlich, greifen die Mitnehmer 18 in Antriebsnuten 20 ein, die an Kurventrommeln 22 ausgebildet sind. Die Kurventrommeln 22 werden jeweils durch einen der Motoren 14 zu einer Drehbewegung angetrieben. Durch die Drehbewegungen der Kurventrommeln 22 werden die in die spiralförmig die Kurventrommeln 22 umlaufenden Antriebsnuten 20 eingreifenden Mitnehmer 18 mitgeschleppt, wodurch der Drehteller 12 zu einer Drehbewegung angetrieben wird.

Grundsätzlich können die Motoren 14 und die Kurventrommeln 22 koaxial angeordnet sein. Bei der vorliegenden Ausführungsform ist jedoch ein (nicht gezeigtes) Getriebe zwischengeschaltet, um eine Antriebsdrehzahl der Motoren 14 zu untersetzen (indirekter Antrieb).

Grundsätzlich kann jede Art von Motoren zum Einsatz gelangen. Die Verwendung von Asynchronmotoren ist mit dem Vorteil verbunden, dass ihre Synchronisierung verhältnismäßig einfach zu realisieren ist. Dazu werden die beiden Motoren 14 parallel geschaltet und von einem gemeinsamen Verstärker (nicht gezeigt) mit Strom versorgt. Durch die Asynchronmotoren inhärenten Eigenschaften stellt sich bei dieser Anordnung automatisch eine gleiche Leistungsabgabe der beiden Motoren ein, die damit "gleichberechtigt" und gleich stark zum Antrieb des Drehtellers 12 beitragen.

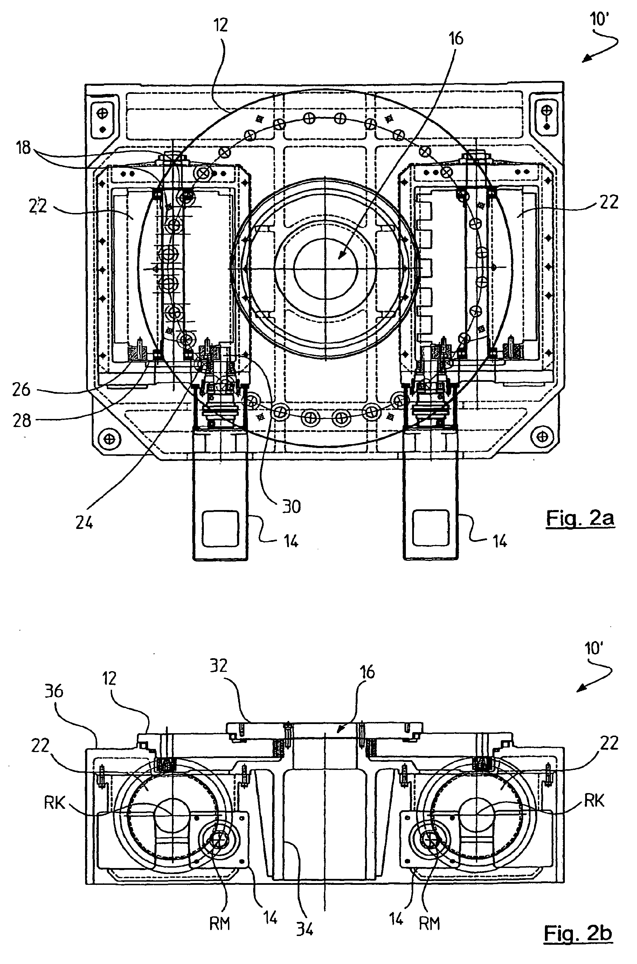

Fig. 2a zeigt eine weitere Ausführungsform 10' des Rundschalttischs in einer Draufsicht. Der Drehteller 12 weist bei dieser Ausführungsform eine kleinere zentrale Öffnung 16 auf als bei der in den Fig. 1a bis 1c gezeigten Ausführungsform. Zwar reduziert dies den freien Raum zur Anordnung weiterer Geräte im Zentrum des Rundschalttischs 10', allerdings ist die Fläche des Drehtellers 12 dementsprechend größer. Dies ist in bestimmten Anwendungsfällen vorteilhaft, z.B. wird die Befestigung von größeren Werkstücken erleichtert.

Auch der Rundschalttisch 10' wird von zwei Motoren 14 angetrieben. Diese sind allerdings nicht auf verschiedenen Seiten des Rundschalttischs 10' angeordnet (antiparallele Anordnung, siehe Fig. 1a und 1b), sondern auf der gleichen Seite. Mit anderen Worten werden die beiden Kurventrommeln 22 des Rundschalttischs 10' von der gleichen Seite mit Antriebsdrehmoment versorgt.

Im Wesentlichen ist der Rundschalttisch 10' ähnlich zu dem Rundschalttisch 10 der Fig. 1a bis 1c aufgebaut. Es ist zu erkennen, dass zwischen den Motoren 14 und den Kurventrommeln 22 jeweils ein Getriebe 24 angeordnet ist. Kurventrommelseitig umfasst das Getriebe 24 einen Zahnradring 26, der drehfest auf einen Trommelfortsatz 28 aufgesteckt ist. Motorseitig umfasst das Getriebe 24 ein Stirnrad 30, das mit einer Ausgangswelle des jeweiligen Motors 14 drehfest verbunden ist und das mit dem Zahnradring 26 kämmt. Zusammen bilden die beiden beschriebenen Komponenten 26, 30 eine Untersetzung.

Fig. 2b zeigt den Rundschalttisch 10' in einem senkrechten Schnitt. Die Schnittansicht zeigt, dass die Rotationsachsen R_{M} der Motoren 14 zwar auf gleicher Höhe in dem Rundschalttisch 10 angeordnet sind, allerdings unterhalb der durch die Rotationsachsen R_{K} der Kurventrommeln 22 aufgespannten Ebene liegen.

Eine weitere Besonderheit des Rundschalttischs 10 ist ein zusätzlich zum Drehteller 12 vorhandener Teller 32, der fest an einem Zentralelement 34 befestigt ist, das wiederum fest mit einem Gehäuse 36 des Rundschalttischs 10' in Verbindung steht. Bei Betrieb des Rundschalttischs 10' bewegt sich der Teller 32 somit nicht. Auf ihm können beispielsweise Montagegeräte oder Bearbeitungsmaschinen angeordnet werden, um die auf dem Drehteller 12 angeordneten Werkstücke zu manipulieren bzw. zu bearbeiten.

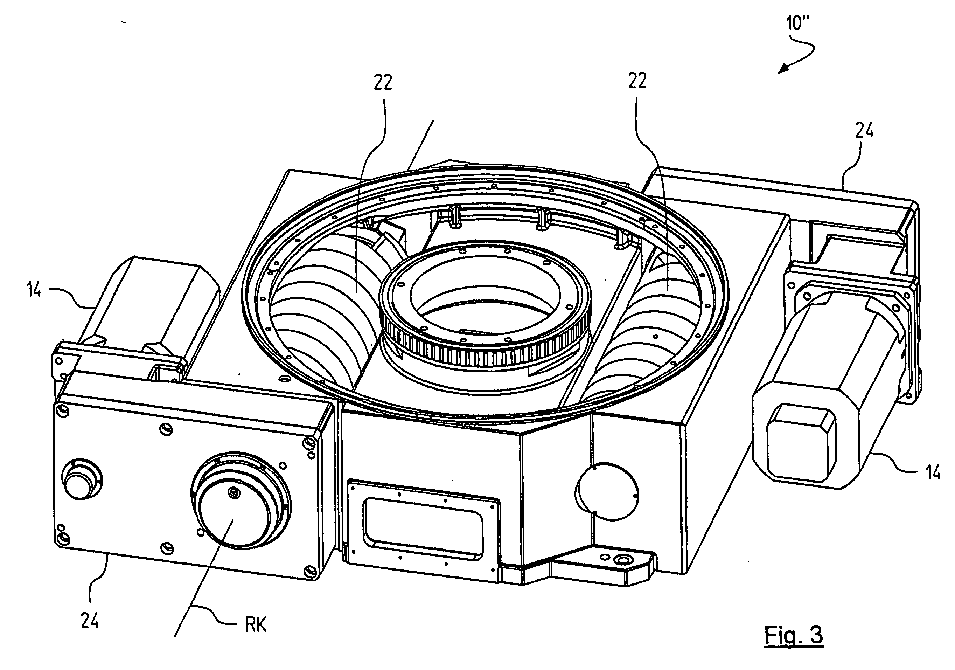

Eine weitere Ausführungsform 10" des Rundschalttischs ist in Fig. 3 gezeigt. Die Motoren 14 sind hier im Gegensatz zu der Ausführungsform der Fig. 1a bis 1c nicht hinter bzw. vor der Kurventrommel 22 angeordnet, sondern die Motoren 14 und die ihnen jeweils zugeordnete Kurventrommel 22 liegen parallel versetzt nebeneinander bezogen auf eine Richtung senkrecht zu den Rotationsachsen R_{K} der Kurventrommeln 22. Auch diese Ausführungsform weist Getriebe 24 zwischen den Motoren 14 und den jeweiligen Kurventrommeln 22 auf. Der Drehteller 12 ist in Fig. 3 nicht gezeigt, um einen Einblick in das Innere des Rundschalttischs 10" zu ermöglichen.

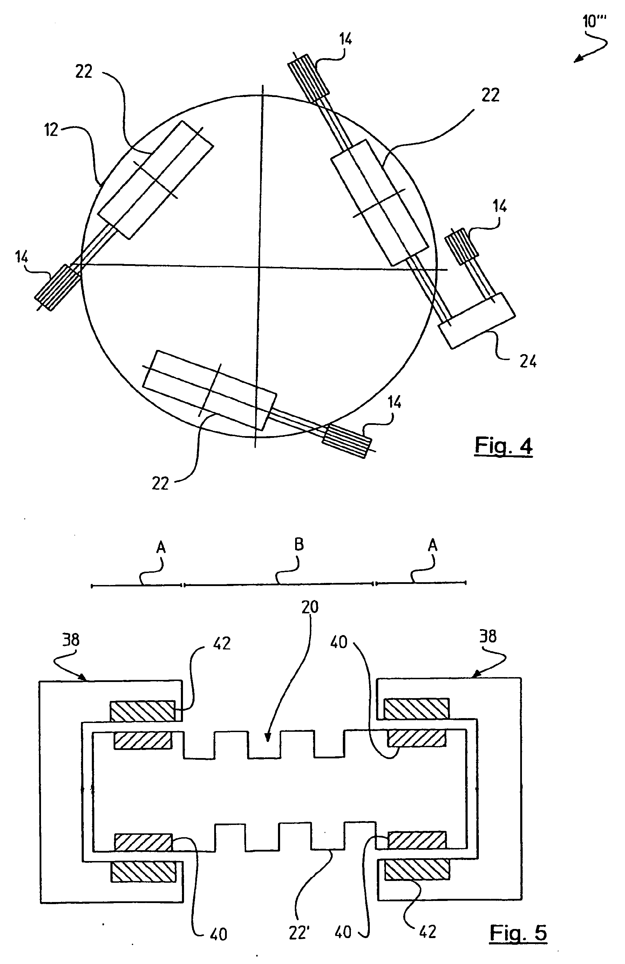

Fig. 4 zeigt schematisch eine weitere Variante, wie der Antrieb des Drehtellers 12 ausgestaltet sein kann. Bei der Ausführungsform 10'" des Rundschalttischs sind drei Kurventrommeln 22 vorgesehen, wobei die Rotationsachsen R_{K} zweier benachbarter Kurventrommeln 22 - von oben gesehen - einen Winkel von etwa 60° einschließen, sodass die Kurventrommeln 22 in Form eines gleichschenkligen Dreiecks angeordnet sind. Zwei der Kurventrommeln 22 werden durch jeweils einen Motor 14 angetrieben. Die dritte Kurventrommel 22 steht mit zwei Motoren 14 in antriebswirksamen Kontakt. Einer der Motoren 14 ist - wie bei den Kurventrommeln mit jeweils einem Motor 14 - koaxial zu der Kurventrommel 22 angeordnet, d.h. sein Antriebsmoment wird direkt auf die Kurventrommel 22 übertragen. Das Antriebsmoment des zweiten Motors 14, der dieser Kurventrommel 22 zugeordnet ist, wird über das Getriebe 24 auf die Kurventrommel 22 übertragen, wobei beispielsweise das Getriebe 24 der Fig. 3 zur Anwendung gelangen kann. Der Rundschalttisch 10"' soll beispielhaft verdeutlichten, dass eine beliebige Anzahl von Motoren 14 und von Kurventrommeln 22 in den verschiedensten Anordnungen kombiniert werden kann, um einen für den jeweiligen Anwendungsfall optimalen Antrieb des Drehtellers 12 bereitstellen zu können.

Fig. 5 zeigt einen Schnitt durch eine Kurventrommel 22', die direkt von zwei Torque-Motoren 38 angetrieben wird, die an den beiden Stirnenden der Kurventrommel 22' angeordnet sind. Eine Antriebswelle ist nicht vorgesehen. Die für den Betrieb der Torque-Motoren 38 erforderlichen Magnete 40 sind direkt an der Kurventrommel 22' angeordnet. Die Magnete 40 wirken mit Spulen 42 zusammen, um eine Antriebsdrehmoment der Kurventrommel 22' zu erzeugen. Die Magnete 40 sind an Verlängerungsabschnitten A der Kurventrommel 22' angeordnet, die nicht mit der Antriebsnut 20 versehen sind. Die Antriebsnut 20 ist auf einen Abschnitt B der Kurventrommel 22' zwischen den beiden Verlängerungsabschnitten A beschränkt.

Die Verlängerungsabschnitte A und der Abschnitt B weisen im Wesentlichen den gleichen Durchmesser auf. Dadurch kann auf einfache Weise ein großes Antriebsmoment bereitgestellt werden. Außerdem vereinfacht dies die Herstellung der Kurventrommel 22'. Die vorstehend beschriebene Art des Antriebs stellt die "direkteste" Form eines Direktantriebs der Kurventrommel 22' dar. Durch den Wegfall von zwischengeschalteten Komponenten werden auf vorteilhafte Weise Antriebsverluste und Positionierungsungenauigkeiten minimiert.

Insbesondere bei Varianten des Rundschalttischs 10, 10', 10", 10"' bei denen keine parallel geschalteten Asynchronmotoren zur automatischen Synchronisierung eingesetzt werden, kann eine synchronisierte Steuerung der Motoren 14 durch eine Master-Slave-Konfiguration bewerkstelligt werden. Diese sieht vor, dass jedem Motor 14 ein eigenes Steuergerät (nicht gezeigt) zugeordnet ist. Eines der Steuergeräte übernimmt die Master-Funktion, d.h. dieses steuert einen Primärmotor 14, der für das Bewegungsprofil des Drehtellers 12 verantwortlich ist. Der oder die weiteren Motor(en) 14 (Slave) dienen zur Unterstützung des Primärmotors 14. Um deren Unterstützungsleistung mit der Antriebsleistung des Primärmotors zu synchronisieren, werden die den Sekundärmotoren 14 zugeordneten Steuergeräte mit Daten versorgt, die das primäre Steuergerät ausgibt. Die sekundären Antriebseinheiten (Slave) sind somit von den Weisungen der primären Antriebseinheit (Master) abhängig. Dieser hierarchische Aufbau erleichtert die Steuerung und stellt eine präzise Ansteuerung des Drehtellers 12 sicher.

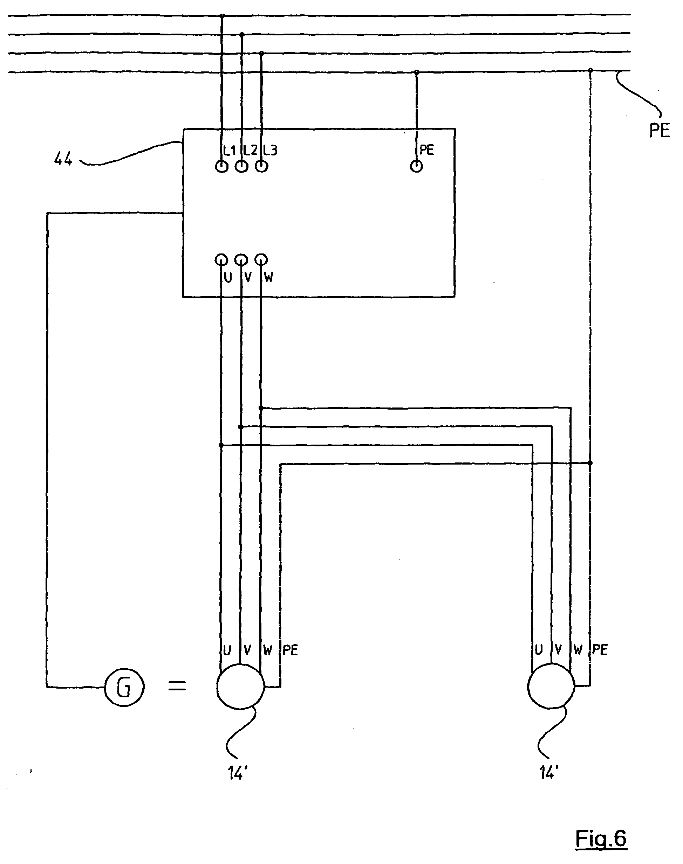

Wie bereits ausgeführt, wird der Rundschalttisch 10, 10', 10", 10"' erfindungsgemäß mit zumindest zwei Asynchronmotoren 14' betrieben. Fig. 6 verdeutlicht eine parallele Schaltung von zwei Asynchronmotoren 14', die mit lediglich einem einzigen Verstärker 44 (Leistungsteil) in Verbindung stehen. D. h. die Versorgung der Motoren 14' mit elektrischer Energie (Drehstrom) findet über Leitungen U, V, W statt, die von dem Verstärker 44 ausgehen. Der Verstärker 44 wiederum steht über Leitungen L1, L2, L3 mit entsprechenden Leitungen, die andere Komponenten des Rundschalttischs 10, 10', 10", 10"' mit Energie versorgen, oder mit einem externen Stromnetz in Verbindung. Leitungen PE dienen zur Erdung der genannten Komponenten.

Die parallele Schaltung der Motoren 14' führt zu einer automatischen Anpassung ihrer Leitungsabgabe. Die Motoren 14' sind somit zwangsgekoppelt. Aufwendige Vorrichtungen und spezielle Anpassungen zur Synchronisierung der Motoren 14' entfallen daher.

Um den Zustand des Systems zu überwachen, ist eine Positionsgeber G vorgesehen, der die Lage einer Antriebswelle eines der Motoren 14' überwacht und die gemessenen Daten an den Verstärker 44 übermittelt. Die Daten werden dort genutzt, um die Antriebsleistung der Motoren 14' zu kontrollieren und ggf. anzupassen. Wie vorstehend bereits erläutert, ist durch die der parallelen Schaltung der Motoren 14' inhärente automatische Synchronisierung der Motoren 14' lediglich die Überwachung eines der Motoren 14' erforderlich, um zuverlässige Informationen über den Antrieb des Rundschalttischs 10, 10', 10", 10"' zu erhalten.

### Bezugszeichenliste

- 10, 10', 10", 10'": Rundschalttisch
- 12: Drehteller
- 14: Motor
- 14': Asynchronmotor
- 16: Öffnung
- 18: Mitnehmer
- 20: Antriebsnut
- 22, 22': Kurventrommel
- 24: Getriebe
- 26: Zahnradring
- 28: Trommelfortsatz
- 30: Stirnrad
- 32: Teller
- 34: Zentralelement
- 36: Gehäuse
- R_{M}, R_{K}: Rotationsachse
- 38: Torque-Motor
- 40: Magnet
- 42: Spule
- 44: Verstärker

- A: Verlängerungsabschnitt
- B: Nutabschnitt
- G: Positionsgeber
- U, V, W, L1, L2, L3: elektrische Leitung
- PE: Erdungsleitung

## Patentansprüche

1. Rundschalttisch mit einem Teller (12) und zumindest zwei Motoren (14) zum Antrieb des Tellers (12) zu einer Drehbewegung, wobei die Motoren (14) über zumindest eine Kurventrommel (22, 22') antriebswirksam mit dem Teller (12) in Verbindung stehen, wobei die Kurventrommel (22, 22') eine Antriebsnut (20) aufweist, in die Mitnehmer (18) eingreifen, die dem Teller (12) zugeordnet sind,
**dadurch gekennzeichnet, dass**
die Antriebsnut (20) eine konstante Steigung aufweist und dass die Motoren (14) Asynchronmotoren sind, die parallel geschaltet sind, so dass Leistungsunterschiede der Asynchronmotoren automatisch ausgeglichen werden, und die von einem gemeinsamen Verstärker ansteuerbar sind.

2. Rundschalttisch nach Anspruch 1,
**dadurch gekennzeichnet, dass**
der Rundschalttisch zumindest eine weitere Kurventrommel (22, 22') mit einer Antriebsnut (20) aufweist, in die die Mitnehmer (18) des Tellers (12) eingreifen, wobei der Kurventrommel (22, 22') und der weiteren Kurventrommel (22, 22') jeweils zumindest ein Motor (14) antriebswirksam zugeordnet ist.

3. Rundschalttisch nach Anspruch 1 oder 2,
**dadurch gekennzeichnet, dass**
der Kurventrommel (22, 22'), insbesondere jeder Kurventrommel (22, 22'), zwei Motoren (14) zugeordnet sind.

4. Rundschalttisch nach einem der vorstehenden Ansprüche, ,
**dadurch gekennzeichnet, dass**
die Kurventrommel (22, 22') und der ihr jeweils zugeordnete Motor (14) koaxial angeordnet sind.

5. Rundschalttisch nach einem der vorstehenden Ansprüche,
**dadurch gekennzeichnet, dass**
zumindest einer der Motoren ein Torque-Motor (38) ist, der die Kurventrommel (22') direkt antreibt.

6. Rundschalttisch nach Anspruch 5,
**dadurch gekennzeichnet, dass**
die Kurventrommel (22') von zwei Torque-Motoren (38) antreibbar ist, die an jeweils einer der Stirnseiten der Kurventrommel (22') koaxial zu der Kurventrommel angeordnet sind.

7. Rundschalttisch nach Anspruch 5 oder 6,
**dadurch gekennzeichnet, dass**
die Kurventrommel (22') einen Fortsatz (A) aufweist, der im Wesentlichen den Durchmesser der Kurventrommel (22') aufweist und der Funktionsbestandteile (40) des Torque-Motors (38) aufweist.

8. Verfahren zum Betrieb eines Rundschalttischs nach
Anspruch 1,
wobei die Asynchronmotoren von einer gemeinsamen Steuerungseinrichtung, insbesondere einem Verstärker, mit einer gemeinsamen Arbeitsbestromung beaufschlagt werden, so dass sich automatisch eine gleiche Leistungsabgabe der Asynchronmotoren einstellt.

## Claims

1. A rotary indexing table having a plate (12) and at least two motors (14) for driving the plate (12) to make a rotary movement,
wherein the motors (14) are drive-operatively connected to the plate (12) via at least one barrel cam (22, 22');
wherein the barrel cam (22, 22') has a driving groove (20) into which drivers (18) engage which are associated with the plate (12); **characterized in that**
the driving groove (20) has a constant gradient; and **in that** the motors (14) are asynchronous motors which are connected in parallel such that power differences of the asynchronous motors are automatically compensated and which can be controlled by a common amplifier.

2. A rotary indexing table in accordance with claim 1,
**characterized in that**
the rotary indexing table has at least one further barrel cam (22, 22') having a driving groove (20) into which the drivers (18) of the plate (12) engage, with at least one respective motor (14) being drive-operatively associated with the barrel cam (22, 22') and the further barrel cam (22, 22').

3. A rotary indexing table in accordance with claim 1 or claim 2,
**characterized in that**
two motors (14) are associated with the barrel cam (22, 22'), in particular with each barrel cam (22, 22').

4. A rotary indexing table in accordance with any one of the preceding claims,
**characterized in that**
the barrel cam (22, 22') and the motor (14) respectively associated with it are arranged coaxially.

5. A rotary indexing table in accordance with any one of the preceding claims,
**characterized in that**
at least one of the motors is a torque motor (38) which directly drives the barrel cam (22').

6. A rotary indexing table in accordance with claim 5,
**characterized in that**
the barrel cam (22') can be driven by two torque motors (38) which are arranged coaxially to the barrel cam at a respective one of the end faces of the barrel cam (22').

7. A rotary indexing table in accordance with claim 5 or claim 6,
**characterized in that**
the barrel cam (22') has a prolongation (A) which has substantially the diameter of the barrel cam (22') and which has functional components (40) of the torque motor (38).

8. A method of operating a rotary indexing table in accordance claim 1, wherein the asynchronous motors are acted on with a common working current by a common control device, in particular by an amplifier, so that an equal power output of the asynchronous motors is automatically adopted.

## Revendications

1. Table de transfert circulaire comprenant un plateau (12) et au moins deux moteurs (14) pour entraîner le plateau (12) en un mouvement de rotation, dans laquelle les moteurs (14) sont en liaison en termes d'entraînement avec le plateau (12) via au moins un tambour à cames (22, 22'),
dans laquelle le tambour à cames (22, 22') comprend une gorge d'entraînement (20) dans laquelle s'engagent des ergots d'entraînement (18) qui sont associés au plateau (12),
**caractérisée en ce que** la gorge d'entraînement (20) présente une pente constante, et **en ce que** les moteurs (14) sont des moteurs asynchrones qui sont branchés en parallèle, de sorte que des différences de puissance des moteurs asynchrones sont automatiquement compensées, et qui peuvent être pilotés par un amplificateur commun.

2. Table de transfert circulaire selon la revendication 1,
**caractérisée en ce que** la table de transfert circulaire comprend au moins un autre tambour à cames (22, 22') avec une gorge d'entraînement (20) dans laquelle s'engagent les ergots d'entraînement (18) du plateau (12), et au moins un moteur (14) est respectivement associé en termes d'entraînement au tambour à cames (22, 22') et à l'autre tambour à cames (22, 22').

3. Table de transfert circulaire selon la revendication 1 ou 2,
**caractérisée en ce que** deux moteurs d'entraînement (4) sont associés au tambour à cames (22, 22'), en particulier à chaque tambour à cames (22, 22').

4. Table de transfert circulaire selon l'une des revendications précédentes,
**caractérisée en ce que** le tambour à cames (22, 22') et le moteur (14) qui lui est respectivement associé sont agencés de manière coaxiale.

5. Table de transfert circulaire selon l'une des revendications précédentes,
**caractérisée en ce que** l'un au moins des moteurs est un moteur-couple (38) qui entraîne directement le tambour à cames (22').

6. Table de transfert circulaire selon la revendication 5,
**caractérisée en ce que** le tambour à cames (22') est susceptible d'être entraîné par deux moteurs-couple (38), qui sont agencés coaxialement au tambour à cames à chacune des faces frontales du tambour à cames (22').

7. Table de transfert circulaire selon la revendication 5 ou 6,
**caractérisée en ce que** le tambour à cames (22') comporte un prolongement (A) qui présente sensiblement le diamètre du tambour à cames (22') et qui comporte les composants fonctionnels (40) du moteur-couple (38).

8. Procédé pour le fonctionnement d'une table de transfert circulaire selon la revendication 1,
dans lequel les moteurs asynchrones sont attaqués par un système de commande commun, en particulier par un amplificateur, avec une alimentation en courant de travail commune, de sorte il s'établit automatiquement une fourniture de puissance égale des moteurs asynchrones.
